# EUROPEAN PATENT APPLICATION

(11) **EP 2 339 502 A1**
(43) Date of publication of application: **29.06.2011**
(21) Application number: 09180251.2
(22) Date of filing: 21.12.2009
(51) Int. Cl.: G06K 7/00, G06K 19/00, G06K 19/077

(54) **Identification card for identifying a user and communication arrangement**

(71) Applicant: NXP B.V., 5656 AG Eindhoven (NL)
(72) Inventor: Gallo, Francesco, 5656 AE Eindhoven (NL)
(74) Representative: Krott, Michel

(57) **Abstract**

An identification card (400) for identifying a user comprises a thin film carrier (402), an accommodation recess (408) formed in the thin film carrier (402) and adapted for detachably accommodating a memory card (410), and a communication interface (412) adapted for being communicatively coupled to a reader and/or writer device.

## Description

### FIELD OF THE INVENTION

The present invention relates to an identification card for identifying a user. Further, the present invention relates to a communication arrangement.

### BACKGROUND OF THE INVENTION

It is commonly known that identification cards are used for authorized or personalized handling of a user. For example, identification cards may be used for conventional identification applications, banking applications, and ticketing applications. An identification card may be made of a plastic thin film carrier which may comprise a communication interface adapted for being communicatively coupled to a reader and/or writer device of the identification card.

For example, for banking applications, the identification card may be designed as a credit card comprising a shape and a size in accordance with or compatible with an ISO/IEC 7810 standard, particularly with an ID-1 format of the latter specification. Further, the communication interface may be adapted to wiredly communicate with a conventional credit card reader and/or writer device and may comprise a chip positioned on top of a surface of the credit card and comprising integrated circuits and electrical contacts for providing the wired connection with the reader and/or writer device of the credit card.

However, handling of an identification card may be limited to a dedicated application of the identification card owing to available data stored on the identification card.

It is further commonly known that flash memory cards, for example, memory cards belonging to the Secure Digital card family, may be used for storing data. Such memory cards may comprise different sizes and shapes, wherein a size of the memory cards tends to steadily decrease. In particular, memory cards of the Secure Digital card family may be designed as a SD card, a miniSD card, and a microSD card with dimensions of these memory cards decreasing.

In the following, it will be referred to a microSD card without loss of generality. The microSD card represents the smallest commercially available memory card of the Secure Digital card family and is frequently used, for example, in digital cameras, cell phones, USB flash drivers (used via adapter devices), portable media players, and GPS devices.

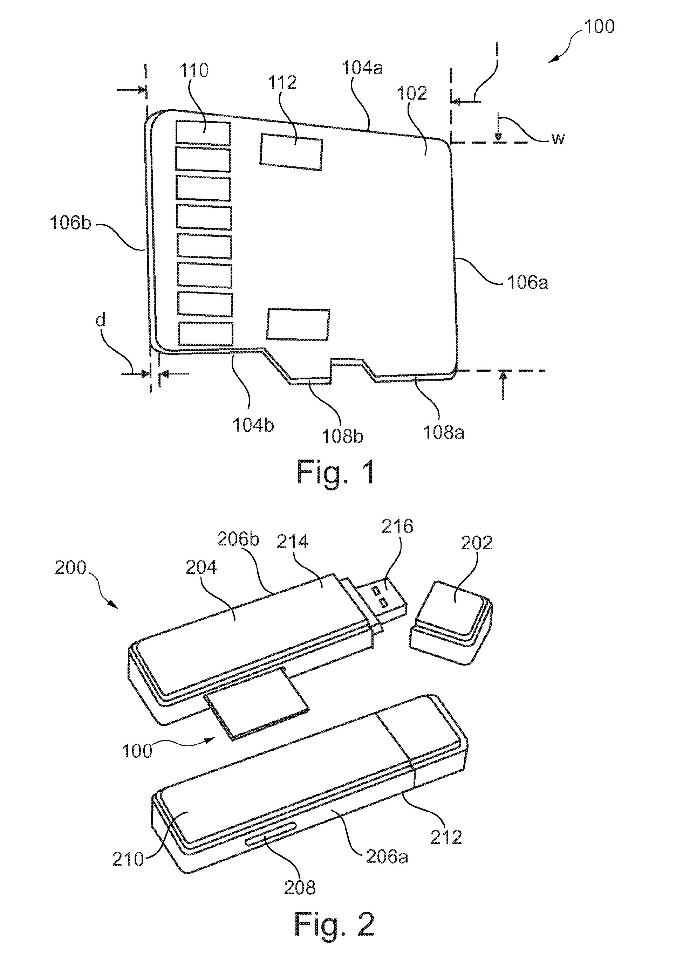

Referring to **Fig. 1****,** a microSD card 100 will be described in more detail. The microSD card 100 is known as "Mobile Security Card CL" and is manufactured by Giesecke & Devrient (http://www.gi-de.com/portal/page?_ageid=44,150689&_dad=porta1&_schema=PORTAL).

The microSD card 100 comprises an essentially rectangular thin film carrier 102 made of a plastic material. Longitudinal sides 104a, b of the thin film carrier 102 have a length 1 of approximately 15 mm and transverse sides 106a, b of the thin film carrier 102 have a length w of approximately 11 mm. The length w of the transverse sides 106a, b corresponds to a width of the thin film carrier 102. A thickness d of the thin film carrier 102 may vary between approximately 0.7 mm (thinnest portion of the thin film carrier) and approximately 1 mm (thickest portion of the thin film carrier). Further, the thin film carrier 102 comprises two step-like variations in width forming projections 108a, b being located along the longitudinal side 104a of the thin film carrier 102.

The memory card 100 comprises eight electrical contacts 110 which may be adapted for providing a wired connection of the memory card 100 to a wired communication interface of an adapter device and/or a reader and/or writer device such as a cell phone. The electrical contacts 110 are located at an ending portion of the thin film carrier 102. Further, electrical contacts 112 are provided on a surface of a central portion of the thin film carrier 102 adjacent to the longitudinal sides 104a, b of the thin film carrier 102 and may be adapted for being electrically connected to a contactless communicating interface of an adapter device and/or the reader and/or writer device.

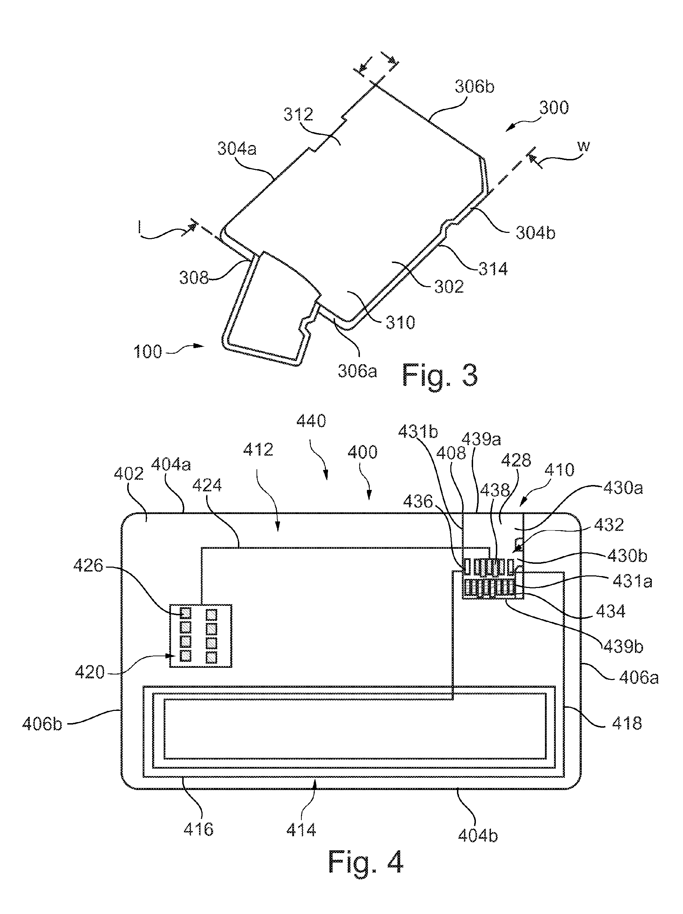

Information stored in a memory (not shown) of the memory card 100 can be read using adapter devices which are described in the following with reference to **Fig. 2****,** **3****.**

A conventional adapter device 200 is designed in the form of a USB stick which comprises a cap 202 and an adapter body 204. The rectangular adapter body 204 has longitudinal sides 206a, b, wherein a slot 208 extends from a front face of the longitudinal side 206a to an interior of the adapter body 204. An extension of the slot 208 runs parallel to top and bottom surfaces 210, 212 of the adapter body 204. An ending portion 214 of the adapter body 204 comprises a metallic adapter plug 216 which can be plugged into a corresponding adapter plug of, for example, a personal computer.

In operation of the adapter device 200, the microSD card 100 is inserted into the slot 208. Further, the adapter plug 216 is connected to the adapter plug of the personal computer such that a data transfer between the microSD card 100 and the personal computer is mediated via the adapter device 200.

Referring to **Fig. 3**, a further adapter device 300 is illustrated which is designed as a SD card comprising a plastic adapter body 302. Longitudinal sides 304a, b of the adapter body 302 have a length of approximately 32 mm and transverse sides 306a, b of the adapter body 302 have a length w of approximately 24 mm. A length w of the transverse sides 306a, b corresponds to a width of the adapter body 302. The adapter body 302 comprises a slot 308 extending from a front face of an ending portion 310 of the adapter body 302 towards an interior of the adapter body 302. Further, the slot 308 extends parallel to top and bottom surfaces 312, 314 of the adapter body 302.

In operation of the adapter device 300, the microSD card 100 is inserted into the slot 308 of the adapter body 202 which, in turn, is inserted into a corresponding adapter plug of, for example, a personal computer. A data transfer between the microSD card 100 and the personal computer is mediated via the adapter device 300.

However, handling of a memory card, particularly of a microSD card, in today's life may be complicated due to the necessity of using external adapter devices for interconnecting the memory card and a reader and/or writer device or due to the necessity of a reader and/or writer device which may be designed according to a particular shape and/or a size of the memory card.

### OBJECT AND SUMMARY OF THE INVENTION

It may be an object of the invention to provide an adapter device for detachably accommodating a memory card and a communication arrangement which may allow for an improved handling of a memory card.

In order to achieve the object defined above, an identification card for identifying a user and a communication arrangement may be provided.

According to an exemplary aspect of the invention, an identification card for identifying a user is provided, wherein the identification card comprises a thin film carrier, an accommodation recess formed in the thin film carrier and adapted for detachably accommodating a memory card, and a communication interface adapted for being communicatively coupled to a reader and/or writer device.

According to another exemplary aspect of the invention, a communication arrangement may be provided, wherein the communication arrangement comprises an identification card as defined above and the memory card adapted for being detachably accommodated in the accommodation recess.

A memory card for storing data may comprise a thin film carrier and a communication interface which may comprise at least one of electrical contacts for electrically connecting the electrical contacts and a communication interface (particularly a communication interface adapted for contactlessly communicating with a reader and/or writer device) of an adapter device (particularly an identification card), and electrical contacts for electrically connecting the electrical contacts and another communication interface (particularly a communication interface adapted for wiredly communicating with a reader and/or writer device) of an adapter device (particularly an identification card).

In the context of this application, the term "identification card" may particularly denote a card associated with a user or owner of the identification card which may allow for personalized and/or authorized handling of the user. In particular, an identification card may particularly enable authenticated access to services which may require a digital identity. An identification card may comprise or be designed as, for example, a credit card for banking applications, a transponder card for authorized access to premises, or a passport for identifying the user.

According to the exemplary aspects of the invention, a communication arrangement and an adapter device for detachably accommodating a memory card may be provided, wherein the adapter device may be adapted or designed as an identification card.

This measure may allow for a user friendly handling of a memory card in today's life, since conventional reader and/or writer devices of identification cards may be used for reading data from and/or writing data to the memory cards. In particular, a user of the memory card may not have to carry along an additional adapter device for the memory card which may be used for interconnecting the memory card and the reader and/or writer device, since the identification card itself may represent the adapter device for the memory card.

Further, memory cards may be usable in today's life without the necessity of developing new reader and/or writer devices for these memory cards. In particular, developing new Over-The-Air (OTA) mechanism systems or microSD reader and/or writer devices may be avoided, whereby a usage of the memory cards in today's life may be significantly facilitated.

Next, further exemplary embodiments of the identification card for identifying a user will be explained. However, these embodiments also apply to the communication arrangement.

The identification card, particularly the thin film carrier of the identification card, may be made of a plastic material.

The identification card, particularly the thin film carrier of the identification card, may be designed in a single pieced way.

The identification card, particularly the thin film carrier of the identification card, may be designed as a solid body.

These measures may allow for a cost-effective manufacture of the identification card.

The identification card may comprise a processor. Thus, the identification card may provide enhanced data processing functionalities compared to conventional external adapter devices such as the USB stick of Fig. 2 which may enable only data transferring possibilities. In particular, the identification card may be adapted as a smart card.

The thin film carrier may have a rectangular shape, wherein a first side of the thin film carrier may have a first length and a second side of the thin film carrier may have a second length, wherein the first length may be larger than the second length, wherein the accommodation recess may extend from the first side to an interior of the thin film carrier. In particular, a first side of the thin film carrier may correspond to a longitudinal side of the thin film carrier and a second side of the thin film carrier may correspond to a transverse side of the thin film carrier. Accordingly, the first length may correspond to a length of the thin film carrier and the second length carrier may correspond to a width of the thin film carrier.

In particular, a third length of a third side of the thin film carrier, in particular a thickness of the thin film carrier, may be smaller than the first and second lengths.

In particular, the first length may be between approximately 130 mm and approximately 120 mm, particularly between approximately 110 mm and approximately 100 mm, further particularly between approximately 90 mm and approximately 80 mm, yet further particularly between approximately 30 mm and approximately 20 mm, and a second length may be between approximately 93 mm and approximately 83 mm, particularly between approximately 79 mm and approximately 69 mm, further particularly between approximately 58 mm and approximately 48 mm, yet further particularly between approximately 20 mm and approximately 10 mm.

In particular, a third length may be between approximately 3 mm and approximately 2 mm, particularly between approximately 2.0 mm and approximately 1.5 mm, further particularly between approximately 1.5 mm and approximately 1.0 mm, yet further particularly between approximately 1.0 mm and approximately 0.5 mm.

In particular, the above mentioned dimensions of the first, second, and third lengths may be combined in any suitable manner.

In particular, (a centre of) the accommodation recess may be arranged at an ending portion of the thin film carrier, particularly at a distance of approximately one third of the first length measured from the second side of the thin film carrier, further particularly at a distance of approximately one fourth of the first length measured from the second side of the thin film carrier, yet further particularly at a distance of approximately one fifth of the first length measured from the second side of the thin film carrier. Arranging the accommodation recess at an ending portion of the thin film carrier may provide an improved utilization of an extension of the thin film carrier such that a remaining portion of the thin film carrier which does not comprise the accommodation recess may be adapted for accommodating the communication interface and/or measures for further applications.

In particular, the accommodation recess may be arranged at a central portion of the thin film carrier.

The identification card, particularly the thin film carrier, may be configured in accordance with (or compatible with) an ISO/IEC 7810 standard. In the context of this application, the "ISO/IEC 7810 standard" may particularly denote the standard or specification which may be available at the filing date of this application. The ISO/IEC 7810 standard may refer to the ISO/IEC 7810 standard, third edition, ICS 53.240.15, stage 90.92 (2005-12-14), TC / SC JTC 1 /SC 17 which may be available via the reference http://www.iso.org/iso/catalogue_detail?csnumber=31432. The identification card, particularly the thin film carrier, may comprise a size compatible with an ID-1, ID-2, ID-3 or ID-000 format specified under the above mentioned standard, wherein a third length, particularly a thickness, may be approximately 0.76 mm and first and second lengths, particularly a length and a width, may be approximately 25 mm and approximately 15 mm (ID-000), particularly approximately 85.60 mm and approximately 53.98 mm (ID-1), further particularly approximately 105 mm and approximately 74 mm (ID-2), yet further particularly approximately 125 mm and approximately 88 mm (ID-3), respectively.

The accommodation recess may comprise a slot, a blind hole or a through hole in which the memory card is detachably accommodatable.

In particular, the slot may be accommodated in or positioned into the thin film carrier (in particular transversely to a direction of a thickness of the thin film carrier) in that the thin film carrier may encompass first and second surfaces of the slot (particularly when seen in a direction of a thickness of the slot), particularly top and bottom surfaces of the slot, being defined to extend along longitudinal and transverse extensions of the slot. The slot may (particularly parallelly) extend to top and bottom surfaces of the thin film carrier, being defined along longitudinal and transverse extensions of the thin film carrier. The slot may extend transversely, particularly perpendicularly, to a front face of the first side of the thin film carrier, whereby canting of the memory card may be prevented upon accommodating the memory card in the slot. The memory card may be detachably accommodatable in the slot in that the memory card may be slidably insertable into the slot, particularly parallely insertable into the slot when seen along longitudial and transverse extensions of the thin film carrier.

In particular, the blind hole may be designed as a thinned portion of the thin film carrier. The blind hole or the through hole may comprise, when seen along a direction of a height of the blind hole or the through hole, an at least partially circumferential line, particularly a full circumferential line. The memory card may be detachably accommodatable in the blind hole or the through hole in that the memory card may be pressable into or plugable in the blind hole or through hole, particularly vertically pressable into or plugable in the blind hole or the through hole seen along a direction of a thickness of the thin film carrier. Thus the memory card may frictionally engage with surfaces of side walls of the blind hole or the through hole, whereby loosing of the memory card may be prevented.

The thin film carrier may comprise an opening which may extend from a surface of the thin film carrier towards the slot such that an interior of the slot and an interior of the opening may be connected to another. Thus a through going connection between the slot interior and the interior of the opening may be provided such that a user of the identification card may be able to touch and thus guide the memory card upon accommodating the memory card in the slot or removing the memory card from the slot.

In particular, (a centre of) the opening may be arranged at a distance of approximately one half of a length extension of the slot measured from a slot opening, particularly at a distance of approximately one third of a length extension of the slot measured from the slot opening, further particularly at a distance of approximately one fourth of a length extension of the slot measured from the slot opening, yet further particularly at a distance of approximately one fifth of a length extension of the slot measured from the slot opening. Thus, accommodating the memory card in the slot or removing the memory card from the slot may be improved in that the user may be able to touch and guide the memory card during almost the complete accommodation or removal process.

The accommodation recess may have a code shaped feature shaped such that the accommodation recess may be adapted for engaging with the memory card, particularly with a microSD memory card. In the context of this application, the term "code shaped feature" may particularly denote a geometry design of the accommodation recess which may deviate from a flat or uniform surface of the accommodation recess. A circumference of the accommodation recess may comprise projections or recesses. Alternatively or additionally, the accommodation recess may comprise a tapered shape or dimensional steps or dimensional variations or dimensional deviations along at least one dimension of the accommodation recess. This measure may result in an improved accommodation of the memory card in the accommodation recess, since the code shape feature may provide a guidance support when accommodating the memory card in the accommodation recess. Providing the accommodation recess with a code shaped feature may be particularly beneficial in connection with designing the accommodation recess as a blind hole or a through hole, since the memory card may frictionally engage with the (code shape feature of the) accommodation recess without using additional holding measures for securely holding the accommodated memory card in place.

The communication interface may be adapted for contactlessly communicating with the reader and/or writer device, whereby the identification card may be provided with a conventional communication measure and may be used in connection with nowadays available contactless reader and/or writer devices.

The communication interface may be adapted for operating according to an ISO/IEC 14443 standard. In the context of this application, the "ISO/IEC 14443 standard" may particularly denote a communication standard or specification which may be available at the filing date of this application. The ISO/IEC 14443 standard may refer to the ISO/IEC 14443 standard, first edition, ICS 35.240.15, stage 60.60 (2008-06-04), TC / SC JTC 1 / SC 17 which may be available via the reference http://www.iso.org/iso/iso_catalogue/catalogue_ics/catalogue_detail_ics.htm?csnumber=3 9693.

The communication interface may comprise an antenna coil adapted for contactlessly communicating with the reader and/or writer device and an electrical connection adapted for electrically connecting the memory card and the antenna coil. The antenna coil may be incorporated into the thin film carrier and may comprise at least one rectangular winding. Alternatively or additionally, the antenna coil may extend along a longitudinal extension of the thin film carrier, thereby the size of the antenna coil being increased compared to an antenna coil extending along a transverse extension of the thin film carrier. Thus, a reasonable extension of the thin film carrier may be utilized for providing a coupling between the identification card and the reader and/or writer device, thereby a strength of the coupling of the communication interface and the reader and/or writer device may be likewise increased. The electrical connection of the communication interface may comprise at least one wire.

The communication interface may be adapted for wiredly communicating with the reader and/or writer device. A wired communication interface which may be at least partially incorporated into thin film carrier may provide a further measure for communicatively interconnecting the identification card and the reader and/or writer device.

The communication interface may be adapted to operate according to an ISO/IEC 7816 standard. In the context of this application, the "ISO/IEC 7816 standard" may particularly denote a communication standard or specification which may be available at the filing date of this application. The ISO/IEC 7816 standard may refer to the ISO/IEC 7816 standard, first edition, ICS 35.240.15, stage 60.60 (2008-11-26), TC / SC JTC 1 /SC 17 which may be available via the reference http://www.iso.org/iso/iso_catalogue/catalogue_tc/catalogue_detail.htm?csnumber=43319.

The communication interface may comprise electrical contacts for wiredly communicating with the reader and/or writer device and an electrical connection for electrically connecting the memory card and the electrical contacts. The electrical connection of the communication interface may comprise at least one wire.

In particular, the communication interface may be adapted for contactlessly communicating with the reader and/or writer device and/or may be adapted for wiredly communicating with the same or another reader and/or writer device.

In particular, the communication interface may comprise integrated circuits adapted for providing an electrical connection of the communication interface and/or the memory card and/or the reader and/or writer device. In particular, the integrated circuits may comprise a chip. In particular, the processor of the identification card may form part of the (chip of the) integrated circuits.

Next, further exemplary embodiments of the communication arrangement will be explained. However, these embodiments also apply to the identification card for identifying a user.

The memory card may comprise electrical contacts adapted for being electrically connectable with a contactless communication interface of the identification card and electrical contacts adapted for being electrically connectable with a wired communication interface of the identification card, thereby the memory card being communicatively coupled to a reader and/or writer device of the identification card.

The memory card may comprise a processor, whereby the memory card may combine smart card functionalities or enhanced data processing functionalities and conventional data storage functionalities. In particular, the processor may be adapted for providing ticketing and/or (prepaid) payment applications.

In particular, the electrical contacts adapted for being electrically connectable with a contactless communication interface of the identification card and the electrical contacts adapted for being electrically connectable with a wired communication interface of the identification card may form part of a communication interface of the memory card.

In particular, the memory card, particularly a communication interface of the memory card, may comprise integrated circuits adapted for providing an electrical connection of the communication interface of the memory card and/or the memory card and/or the reader and/or writer device. In particular, the processor of the memory card may form part of the integrated circuits.

According to an exemplary aspect of the invention, a communication arrangement and an identification card may be provided which may be designed as a conventional credit card of an ID-1 size. The credit card may comprise a thin film carrier provided with a slot which may be arranged at an ending portion of the credit card. The slot is accommodated in the thin film carrier and extends from a front face of a longitudinal side of the thin film carrier towards an interior of the memory card. A memory card, particularly a microSD card of a constant thickness, may be detachably plugable into the credit card. The memory card may comprise a Secure Element and a memory in which personalized data of the user or owner of the credit card may be stored. Further, the memory card may comprise a processor which may enable enhanced data processing functionalities for ticketing purposes. Thus, in addition to a conventional use of the credit card for banking applications, the credit card may be used for ticketing or payment purposes, e.g. for cashless payment of public transport services. In particular, the identification card may be used for configuring, updating and personalizing the memory card in case of banking and ticketing applications. Further, the identification card may be used for recharging the memory card in case of pre-paid ticketing applications.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### BRIEF DESCRIPTION OF THE DRAWINGS

Fig. 1 illustrates a perspective view of a conventional microSD card.
Fig. 2 illustrates a perspective view of a conventional adapter device into which the microSD card of Fig. 1 is plugable.
Fig. 3 illustrates a perspective view of a further conventional adapter device into which the microSD card of Fig. 1 is plugable.
Fig. 4 illustrates a top view of an identification card according to an exemplary embodiment of the invention in which a memory card is accommodated.
Fig. 5a illustrates a perspective view of the identification card of Fig. 4 comprising a slot.
Fig. 5b illustrates a further perspective view of the identification card of Fig. 4 comprising a slot.
Fig. 5c illustrates a yet further perspective view of the identification card of Fig. 4 comprising a blind hole.
Fig. 5d illustrates a yet further perspective view of the identification card of Fig. 4 comprising a through hole.

### DESCRIPTION OF EMBODIMENTS

The illustration in the drawing is schematic. It is noted that in different figures, similar or identical elements are provided with the same reference signs or with reference signs, which are different from the corresponding reference signs only within the first digit.

Referring to **Fig. 4****,** an identification card 400 for identifying a user is illustrated.

The identification card 400 is made of a plastic material and comprises a single pieced, solid, rectangular thin film carrier 402 compatible with an ID-1 format of an ISO/IEC 7810 standard and having first sides 404a, b, i.e. longitudinal sides, and second sides 406a, b, i.e. transverse sides. A length and a width of the thin film carrier 402 are dimensioned to be 85.60 mm and 53.98 mm, respectively. Corners of the thin film carrier 402 are rounded with a radius of 3.18 mm. A third length of third sides (not shown), i.e. a thickness, of the identification card 400 is 0.76 mm.

The identification card 400 comprises an accommodation recess 408 in which a memory card 410 is detachably accommodatable. In the embodiment illustrated, the memory card 410 is designed as a microSD card and is completely accommodated in the accommodation recess 408. The memory card 410 will be further detailed below.

The accommodation recess 408 is positioned adjacent to the transverse side 406a of the thin film carrier 402 at a distance of approximately one fourth of the longitudinal extension of the thin film carrier 402 measured from the transverse side 406a of the thin film carrier 402. Further, the accommodation recess 408 abuts against a front face of the longitudinal side 404a of the thin film carrier 402.

The identification card 400 further comprises a communication interface 412 which is adapted for being communicatively coupled to a reader and/or writer device.

The communication interface 412 comprises a first communication interface 414 which is adapted for contactlessly communicating with the reader and/or writer device and which is adapted for operating according to an ISO/IEC 14443 standard.

The first communication interface 414 comprises an antenna coil 416 of at least one rectangular winding. In the embodiment illustrated, the antenna coil 416 comprises three windings which extend along a longitudinal extension of the identification card 400 and cover almost half of a transverse extension of the thin film carrier 402. The antenna coil 416 is positioned opposite of the accommodation recess 408 when seen along the longitudinal extension of the thin film carrier 402. The antenna coil 416 is incorporated into the plastic material of the solid thin film carrier 402 in that the antenna coil 416 is circumferentially covered by the plastic material.

Further, the first communication interface 414 comprises an electrical connection 418 which is designed as wire extensions of the windings of the antenna coil 416. The electrical connection 418 provides an electrical interconnection of the antenna coil 416 and the memory card 410. The wire extensions are guided from the antenna coil 416 to the accommodation recess 408 within an ending portion of the thin film carrier in which the accommodation recess 408 is located. In the illustrated embodiment, the electrical connection 418 runs parallel to the transverse side 406a, b of the thin film carrier 402 and ends into the accommodation recess 408 in a perpendicular way. However, the electrical connection 418 may be arranged in any other suitable manner, in order to electrically interconnect the antenna coil 416 and the memory card 410 when being accommodated in the accommodation recess 408.

The communication interface 412 further comprises a second communication interface 420 which is adapted for wiredly communicating with the reader and/or writer device and which is adapted for operating according to an ISO/IEC 7816 standard.

The second communication interface 420 comprises an electrical connection 424 for interconnecting the memory card 410 and eight electrical contacts 426. The electrical contacts 426 are provided on top of a top surface of the identification card 400 and are adapted for being wiredly coupled to a corresponding wired communication interface of the or a further reader and/or writer device. In the illustrated embodiment, the electrical contacts 426 are arranged in a central portion of the thin film carrier 402 adjacent to the transverse side 406b of the thin film carrier 402 and opposite to the accommodation recess 408 when seen along a transverse extension of the thin film carrier 402. However, the electrical contacts 426 may be arranged at any other portion of the thin film carrier 402.

In the illustrated embodiment, the electrical connection 424 is designed as a wire running parallel to the transverse side 406a, b of the thin film carrier 402 from the electrical contacts 426 towards the longitudinal side 404a of the thin film carrier 402 and perpendicularly kinking towards the accommodation recess 408 such that the wire runs parallel to the longitudinal side 404a, b of the thin film carrier 402. However, the electrical connection 424 may be arranged in any other suitable manner, in order to electrically interconnect the electrical contacts 426 and the memory card 410 when being accommodated in the accommodation recess 408.

Further, the identification card 400 is adapted as a smart card and comprises a processor for processing data upon a reading and/or writing operation of the reader and/or writer device. The processor is incorporated into the thin film carrier 402 and is interconnected to at least one of the communication interfaces 414 and 420 via suitable integrated circuits which provide electrical interconnection.

Alternatively, the identification card 400 does not comprise a processor and is adapted as an adapter device for transferring data between the memory card 410 and the reader and/or writer device.

In the following, the memory card 410 will be detailed.

The memory card 410 is similarly designed as the memory card 100 illustrated in Fig. 1.

The memory card 410 is made of a rectangular flat thin film plastic carrier 428 comprising two projections 430a, b extending from a longitudinal side 431a of the memory card 410 towards outside. Another longitudinal side 431b of the memory card 410 is designed in a flat way, i.e. without projections.

Further, the memory card 410 comprises a communication interface 432 for being communicatively coupled to the identification card 400. The communication interface 432 comprises electrical contacts 434, electrical contacts 436 and electrical contacts 438. The electrical contacts 434 are located at an ending portion of the memory card 410 adjacent to a transverse side 439b of the memory card 410. The electrical contacts 434 are adapted for electrically connecting the memory card 410 with a reader and/or writer device. The electrical contacts 436 are adapted for electrically interconnecting the memory card 410 to the contactless communication interface 414 of the identification card 400 and are located adjacent to the longitudinal sides 431a, b of the thin film carrier 428 of the memory card 410 in a central portion of the thin film carrier 402 of the memory card 410. Further, the electrical contacts 438 are adapted for being electrically coupled to a wired communication interface such as the communication interface 420 of the identification card 400. The electrical contacts 438 are located between the electrical contacts 436 and cover a central portion of the thin film carrier 428 of the memory card 410.

However, any other suitable arrangement of the electrical contacts 434, 436, 438 on the memory card 410 may be possible.

Further, the memory card 410 comprises a processor adapted for providing ticketing applications.

The identification card 400 and the memory card 410 form a communication arrangement 440.

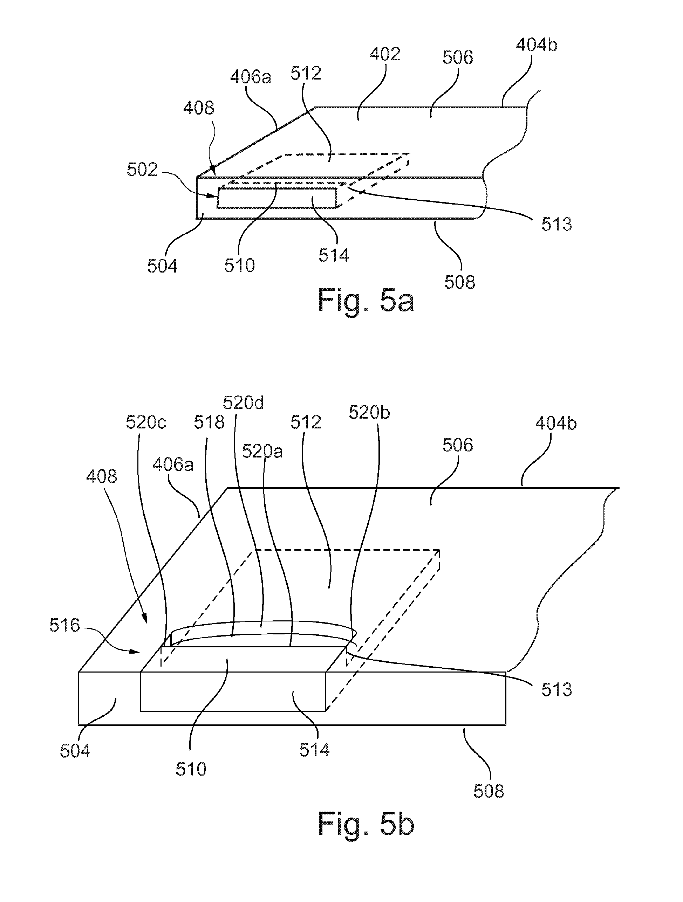

Referring to **Figs. 5a****-c,** embodiments of the accommodation recess 408 will be detailed.

As illustrated in **Fig. 5a****,** the accommodation recess 408 is designed as a slot 502 which extends from a front face 504 of the longitudinal side 404a of the thin film carrier 402. The slot 502 runs in parallel to top and bottom surfaces 506, 508 of the thin film carrier 402. Further, the slot 502 is code shaped in that an ending portion 510 of the slot 502 located adjacent to the front face 504 of the thin film carrier 402 comprises a larger thickness than an ending portion 512 of the slot 502 located towards the interior of the thin film carrier 402. Thus the slot 502 comprises a thickness step 513 adjacent to the front face 504 of the longitudinal side 404a of the thin film carrier 402. A width of a slot opening 514 measured along the longitudinal extension of the thin film carrier 402 is dimensioned to accommodate the memory card 410. In case of the memory card 410 shown in **Fig. 4****,** the slot opening 514 has a larger width than a total width of the memory card 410 such that the projections 430a, b of the memory card 410 laterally fit into the slot 502.

Upon inserting the memory card 410 into the slot 502, the memory card 410 is slidably pushed into the slot 502 until the memory card 410 is completely accommodated in the slot 502.

**Fig. 5b** illustrates a second embodiment of the accommodation recess 408 in **Fig. 4****.**

The accommodation recess 408 is designed as a slot 516 which is identical to the slot 502 of **Fig. 5a****.** However, a slot opening 514 is located at an upper edge of the longitudinal side 404a of the identification card 400.

An opening 518 extends from the top surface 506 of the thin film carrier 402 towards an interior of the identification card 400 such that a through going connection of the interior of the opening 518 and an interior of the slot 516 is accomplished. The opening 518 is located at a distance of one fourth of a length extension of the slot 516 measured from the slot opening 514 and abuts against the thickness step 513 of the slot 516, wherein a side wall 520a of the opening 516 is identical to the outer surface of the thickness step 513. Side walls 520b, c of the opening 518 run parallel to longitudinal front faces of the slot 516. A side wall 520d of the opening 518 comprises an elliptical shape.

Upon inserting the memory card 410 into the slot 516, the memory card 410 is slidably pushed into the slot 516 until the memory card 410 is completely accommodated in the slot 516. A user may support the accommodation process of the memory card 410 in that the user gently presses the memory card 410, for example by his nail, and guides the memory card 410 into the interior of the slot 516. Upon removing the memory card 410 from the slot 516, the user gently presses the memory card 410, for example by his nail, and guides the memory card 410 towards outside of the slot 516.

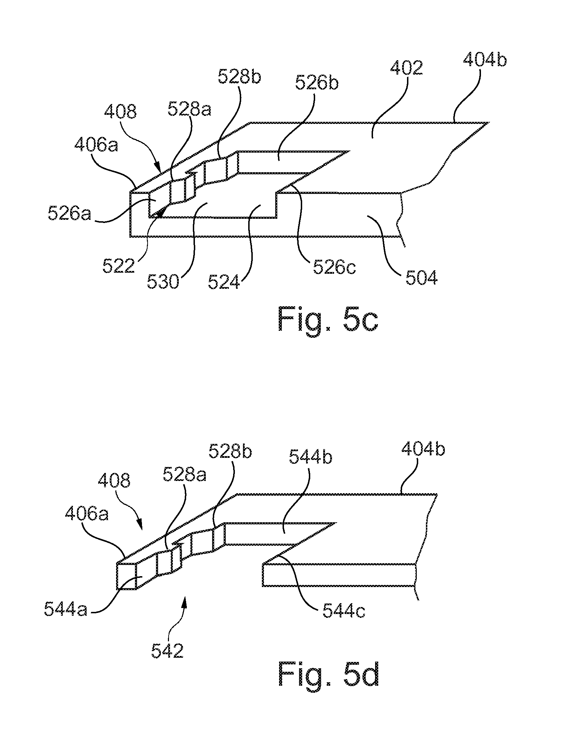

**Fig. 5c** illustrates a third embodiment of the accommodation recess 408 in **Fig. 4****.**

The accommodation recess 408 is designed as a blind hole 522 which is incorporated in the thin film carrier 402 in that the blind hole 522 extends from the top surface 506 of the thin film carrier 402 towards the interior of the thin film carrier 402. Further, lateral dimensions of the blind hole 522 measured along the longitudinal and transverse extension of the thin film carrier 402 of the identification card 400 are dimensioned to be larger than a height of the blind hole 522 measured along a thickness extension of the thin film carrier 402 of the identification card 400. In the embodiment illustrated, the blind hole 522 comprises an opening 524 which is incorporated into the front face 504 of the thin film carrier 402. Further, the blind hole 522 comprises three sidewalls 526a-c running parallelly to front faces 504 of the thin film carrier 402. An outer circumference of the blind hole 522 is code shaped in that the first side wall 526a of the blind hole 522 comprises two projections 528a, b extending into the interior of the blind hole 522.

The memory card 410 is accommodatable into the blind hole 522 in that the memory card 410 is vertically pressed into the blind hole 522, thereby the memory card 410 contacting the side walls 526a-c and a bottom side 530 of the blind hole 522. Thus, the memory card 410 is frictionally engaged with at least surfaces of the side walls 526a-c of the blind hole 522 such that loosening of the memory card 410 is prevented.

Referring to **Fig. 5d****,** a fourth embodiment of the accommodation recess 408 is illustrated. The accommodation recess 408 is designed as a through hole 542 comprising the identical circumferential code shape feature as the blind hole 522 illustrated in **Fig. 5c****.** Similarly to the blind hole 522, lateral dimensions of the through hole 542 measured along the longitudinal and transverse extensions of the thin film carrier 402 of the identification card 400 are dimensioned to be larger than a height of the through hole 542 measured along a thickness extension of the thin film carrier 402 of the identification card 400.

The memory card 410 is accommodatable into the through hole 542 in that the memory card 410 is vertically pressed into the through hole 542, thereby the memory card 410 contacting side walls 544a-c of the through hole 522. Thus, the memory card 410 is frictionally engaged with surfaces of the side walls 544a-c of the through hole 542 such that loosening of the memory card 410 is prevented.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. An identification card (400) for identifying a user, the identification card (400) comprising:
a thin film carrier (402);
an accommodation recess (408) formed in the thin film carrier (402) and adapted for detachably accommodating a memory card (410); and
a communication interface (412) adapted for being communicatively coupled to a reader and/or writer device.

2. The identification card (400) according to claim 1, further comprising a processor.

3. The identification card (400) according to claim 1, wherein the thin film carrier (402) has a rectangular shape, wherein a first side (404a, b) of the thin film carrier (402) has a first length and a second side (406a, b) of the thin film carrier (402) has a second length, wherein the first length is larger than the second length, wherein the accommodation recess (408) extends from the first side (404a) to an interior of the thin film carrier (402).

4. The identification card (400) according to claim 1, configured in accordance with an ISO/IEC 7810 standard, particularly the thin film carrier (402) being configured in accordance with the ISO/IEC 7810 standard.

5. The identification card (400) according to claim 1, wherein the accommodation recess (408) comprises a slot (502, 516), a blind hole (522) or a through hole (542) in which the memory card (410) is accommodatable.

6. The identification card (400) according to claim 1, wherein the accommodation recess (408) has a code shape feature (513, 528a, b) shaped such that the accommodation recess (408) is adapted for engaging with the memory card (410), particularly with a microSD memory card.

7. The identification card (400) according claim 1, wherein the communication interface (412) is adapted for contactlessly communicating with the reader and/or writer device.

8. The identification card (400) according to claim 1, wherein the communication interface (412) is adapted for operating according to an ISO/IEC 14443 standard.

9. The identification card (400) according to claim 1, wherein the communication interface (412) comprises an antenna coil (416) adapted for contactlessly communicating with the reader and/or writer device and an electrical connection (418) adapted for electrically connecting the memory card (410) and the antenna coil (416).

10. The identification card (400) according to claim 1, wherein the communication interface (412) is adapted for wiredly communicating with the reader and/or writer device.

11. The identification card (400) according to claim 1, wherein the communication interface (412) is adapted to operate according to an ISO/IEC 7816 standard.

12. The identification card (400) according to claim 1, wherein the communication interface (412) comprises electrical contacts (426) for wiredly communicating with the reader and/or writer device and an electrical connection (424) for electrically connecting the memory card (410) and the electrical contacts (426).

13. A communication arrangement (440), the communication arrangement (440) comprising:
an identification card (400) according to claim 1; and
the memory card (410) adapted for being detachably accommodated in the accommodation recess (408).

14. The communication arrangement (440) according to claim 13, wherein the memory card (410) comprises electrical contacts (436) adapted for being electrically connectable with a contactless communication interface (414) of the identification card (400) and electrical contacts (438) adapted for being electrically connectable with a wired communication interface (420) of the identification card (400).

15. The communication arrangement (440) according to claim 13, wherein the memory card (410) comprises a processor.

## Amended claims

### Amended claims in accordance with Rule 137(2) EPC.

**1.** An identification card (400) for identifying a user, the identification card (400) comprising:
a thin film carrier (402);
an accommodation recess (408) formed in the thin film carrier (402) and adapted for detachably accommodating a memory card (410), wherein the accommodation recess (408) comprises a slot (516); and
a communication interface (412) adapted for being communicatively coupled to a reader and/or writer device,
wherein the thin film carrier (402) comprises an opening (518) which extends from a surface (506) of the thin film carrier (402) towards the slot (516) such that an interior of the slot (516) and an interior of the opening are connected to another.

**2.** The identification card (400) according to claim 1, further comprising a processor.

**3.** The identification card (400) according to claim 1, wherein the thin film carrier (402) has a rectangular shape, wherein a first side (404a, b) of the thin film carrier (402) has a first length and a second side (406a, b) of the thin film carrier (402) has a second length, wherein the first length is larger than the second length, wherein the accommodation recess (408) extends from the first side (404a) to an interior of the thin film carrier (402).

**4.** The identification card (400) according to claim 1, configured in accordance with an ISO/IEC 7810 standard, particularly the thin film carrier (402) being configured in accordance with the ISO/IEC 7810 standard.

**5.** The identification card (400) according to claim 1, wherein the accommodation recess (408) comprises a blind hole (522) or a through hole (542) in which the memory card (410) is accommodatable.

**6.** The identification card (400) according to claim 1, wherein the accommodation recess (408) has a code shape feature (513, 528a, b) shaped such that the accommodation recess (408) is adapted for engaging with the memory card (410), particularly with a microSD memory card.

**7.** The identification card (400) according claim 1, wherein the communication interface (412) is adapted for contactlessly communicating with the reader and/or writer device.

**8.** The identification card (400) according to claim 1, wherein the communication interface (412) is adapted for operating according to an ISO/IEC 14443 standard.

**9.** The identification card (400) according to claim 1, wherein the communication interface (412) comprises an antenna coil (416) adapted for contactlessly communicating with the reader and/or writer device and an electrical connection (418) adapted for electrically connecting the memory card (410) and the antenna coil (416).

**10.** The identification card (400) according to claim 1, wherein the communication interface (412) is adapted for wiredly communicating with the reader and/or writer device.

**11.** The identification card (400) according to claim 1, wherein the communication interface (412) is adapted to operate according to an ISO/IEC 7816 standard.

**12.** The identification card (400) according to claim 1, wherein the communication interface (412) comprises electrical contacts (426) for wiredly communicating with the reader and/or writer device and an electrical connection (424) for electrically connecting the memory card (410) and the electrical contacts (426).

**13.** A communication arrangement (440), the communication arrangement (440) comprising:
an identification card (400) according to claim 1; and
the memory card (410) adapted for being detachably accommodated in the accommodation recess (408).

**14.** The communication arrangement (440) according to claim 13, wherein the memory card (410) comprises electrical contacts (436) adapted for being electrically connectable with a contactless communication interface (414) of the identification card (400) and electrical contacts (438) adapted for being electrically connectable with a wired communication interface (420) of the identification card (400).

**15.** The communication arrangement (440) according to claim 13, wherein the memory card (410) comprises a processor.
